# EUROPEAN PATENT APPLICATION

(11) **EP 4 737 988 A1**
(43) Date of publication of application: **06.05.2026**
(21) Application number: 23945963.9
(22) Date of filing: 19.07.2023
(51) Int. Cl.: G02B 30/56, G02B 27/01, G02B 5/18, G02B 27/09, B60K 35/00

(54) **FLOATING DISPLAY DEVICE FOR VEHICLE**

(71) Applicant: LG Electronics Inc., Yeongdeungpo-gu Seoul 07336 (KR)
(72) Inventor: CHOI, Dongjune, Seoul 06772 (KR); SHIN, Hyunkwon, Seoul 06772 (KR); CHOI, Seungyul, Seoul 06772 (KR); CHUNG, Jihyouk, Seoul 06772 (KR)
(74) Representative: Vossius & Partner Patentanwälte Rechtsanwälte mbB
(86) International application number: PCT/KR2023/010339
(87) International publication number: WO 2025/018453

(57) **Abstract**

A floating display device for a vehicle is disclosed. The floating display device for a vehicle, according to an embodiment of the present disclosure, includes an image generating device configured to output a projected image; and a mirror configured to reflect the projected image from the image generating device and output a floating image based on inverted real image, in which the mirror includes an anamorphic mirror or an anamorphic Fresnel concave mirror. Accordingly, it is possible to reduce the size of the floating display device for the vehicle while implementing a projection image on a large screen.

## Description

### BACKGROUND

### 1. Technical Field

This disclosure relates to a floating display device for vehicle, and more particularly, to a floating display device for vehicle capable of reducing fatigue caused by binocular disparity while implementing a clear floating image on a large screen.

### 2. Description of the Related Art

A vehicle is an apparatus that moves in the direction desired by a user riding in it. A representative example is an automobile.

Meanwhile, a floating display device for vehicle is installed inside the vehicle, for the convenience of a user using the vehicle.

For example, a display is placed on a cluster, etc., to display various types of information. Meanwhile, in order to display vehicle driving information, etc., separately from the cluster, various displays, such as an Audio Video Navigation (AVN) display and a head-up display configured to output a projected image on a windshield, has been installed in a vehicle.

Meanwhile, prior art U.S. Patent No. US 5,087,116 discloses a method for outputting a floating image using a Fresnel mirror and a conventional mirror.

However, according to the Fresnel mirror described in the prior art, aberrations occur and an extended focal length is formed, so that clarity is poor. Furthermore, binocular disparity increases depending on the viewing position, thereby causing fatigue.

### SUMMARY

The disclosure has been made in view of the above problems, and can provide a floating display device for vehicle capable of reducing fatigue caused by binocular disparity while implementing a clear floating image on a large screen.

The disclosure can further provide a floating display device for vehicle capable of reducing a size while implementing a clear floating image on a large screen.

In accordance with an aspect of the present disclosure, a floating display device for vehicle includes: an image generating device configured to output a projected image; and a mirror configured to reflect the projected image from the image generating device and output a floating image based on inverted real image, in which the mirror includes an anamorphic mirror or an anamorphic Fresnel concave mirror.

Meanwhile, the anamorphic mirror or the anamorphic Fresnel concave mirror can have a different focal length on a first axis and a second axis.

Meanwhile, a distance between the image generating device and the mirror can be greater than a focal length of the mirror.

Meanwhile, the floating display device for vehicle according to an aspect of the present disclosure can further include at least one of a phase delay plate, a half mirror, or a reflective polarizing mirror disposed between the image generating device and the mirror.

Meanwhile, the floating display device for vehicle according to an aspect of the present disclosure can further include a second mirror configured to reflect a projected image from the image generating device, in which the mirror is configured to reflect the projected image from the second mirror and output the floating image based on inverted real image.

Meanwhile, a sum of a distance between the image generating device and the second mirror and a distance between the second mirror and the mirror can be greater than a focal length of the mirror.

Meanwhile, a distance between the image generating device and the second mirror can be greater than a distance between the second mirror and the mirror.

Meanwhile, the floating image reflected from the mirror can be reflected to a windshield of vehicle and output to a predetermined area.

Meanwhile, in accordance with another aspect of the present disclosure, a floating display device for vehicle includes: an image generating device configured to output a projected image; and a mirror configured to reflect the projected image from the image generating device and output a floating image based on inverted real image, in which the mirror includes a Fresnel concave mirror having a pitch of 0.3 mm to 0.5 mm or a Fresnel concave mirror having a curved reflective surface.

Meanwhile, the floating display device for vehicle according to an aspect of the present disclosure can further include a second mirror configured to reflect the projected image from the image generating device, in which the mirror is configured to reflect the projected image from the second mirror and output the floating image based on inverted real image.

Meanwhile, in accordance with another aspect of the present disclosure, a floating display device for vehicle includes: an image generating device configured to output a projected image; a half mirror configured to reflect the projected image from the image generating device; and a first mirror and a second mirror spaced apart from each other, and configured to reflect a projected image from the half mirror, respectively, and output a first floating image and a second floating image based on an inverted real image, respectively, respectively, in which the half mirror is configured to transmit the first floating image and the second floating image.

Meanwhile, the first mirror and the second mirror can include an anamorphic mirror or an anamorphic Fresnel concave mirror having a different focal length on a first axis and a second axis.

Meanwhile, the first mirror and the second mirror can include a Fresnel concave mirror having a pitch of 0.3 mm to 0.5 mm or a Fresnel concave mirror having a curved reflective surface.

Meanwhile, in accordance with another aspect of the present disclosure, a floating display device for vehicle includes: an image generating device configured to output a projected image; a first folding mirror and a second folding mirror spaced apart from each other, and configured to reflect the projected image from the image generating device respectively; and a mirror configured to reflect the projected image from the first folding mirror and the second folding mirror, respectively, and output a first floating image and a second floating image based on an inverted real image, respectively.

Meanwhile, the mirror can include an anamorphic mirror or an anamorphic Fresnel concave mirror having a different focal length on a first axis and a second axis.

Meanwhile, the mirrors can include a Fresnel concave mirror having a pitch of 0.3 mm to 0.5 mm or a Fresnel concave mirror having a curved reflective surface.

### EFFECTS OF THE DISCLOSURE

According to an embodiment of the present disclosure, a floating display device for vehicle includes: an image generating device configured to output a projected image; and a mirror configured to reflect the projected image from the image generating device and output a floating image based on inverted real image, in which the mirror includes an anamorphic mirror or an anamorphic Fresnel concave mirror. Accordingly, it is possible to reduce fatigue caused by binocular disparity while implementing a clear floating image on a large screen.

Meanwhile, the anamorphic mirror or the anamorphic Fresnel concave mirror can have a different focal length on a first axis and a second axis. Accordingly, it is possible to reduce fatigue caused by binocular disparity while implementing a clear floating image on a large screen.

Meanwhile, a distance between the image generating device and the mirror can be greater than a focal length of the mirror. Accordingly, it is possible to reduce fatigue caused by binocular disparity while implementing a clear floating image on a large screen.

Meanwhile, the floating display device for vehicle further includes at least one of a phase delay plate, a half mirror, or a reflective polarizing mirror disposed between the image generating device and the mirror. Accordingly, it is possible to reduce fatigue caused by binocular disparity while implementing a clear floating image on a large screen.

Meanwhile, the floating display device for vehicle according to an aspect of the present disclosure can further include a second mirror configured to reflect a projected image from the image generating device, in which the mirror is configured to reflect the projected image from the second mirror and output the floating image based on inverted real image. Accordingly, it is possible to reduce fatigue caused by binocular disparity while implementing a clear floating image on a large screen.

Meanwhile, a sum of a distance between the image generating device and the second mirror and a distance between the second mirror and the mirror can be greater than a focal length of the mirror. Accordingly, it is possible to reduce fatigue caused by binocular disparity while implementing a clear floating image on a large screen.

Meanwhile, a distance between the image generating device and the second mirror can be greater than a distance between the second mirror and the mirror. Accordingly, it is possible to reduce fatigue caused by binocular disparity while implementing a clear floating image on a large screen.

Meanwhile, the floating image reflected from the mirror can be reflected to a windshield of vehicle and output to a predetermined area. Accordingly, it is possible to reduce fatigue caused by binocular disparity while implementing a clear floating image on a large screen.

Meanwhile, in accordance with another aspect of the present disclosure, a floating display device for vehicle according to an embodiment of the present disclosure includes: an image generating device configured to output a projected image; and a mirror configured to reflect the projected image from the image generating device and output a floating image based on inverted real image, in which the mirror includes a Fresnel concave mirror having a pitch of 0.3 mm to 0.5 mm or a Fresnel concave mirror having a curved reflective surface. Accordingly, it is possible to reduce fatigue caused by binocular disparity while implementing a clear floating image on a large screen.

Meanwhile, the floating display device for vehicle according to an aspect of the present disclosure can further include a second mirror configured to reflect the projected image from the image generating device, in which the mirror is configured to reflect the projected image from the second mirror and output the floating image based on inverted real image. Accordingly, it is possible to reduce fatigue caused by binocular disparity while implementing a clear floating image on a large screen.

Meanwhile, in accordance with another aspect of the present disclosure, a floating display device for vehicle includes: an image generating device configured to output a projected image; a half mirror configured to reflect the projected image from the image generating device; and a first mirror and a second mirror spaced apart from each other, and configured to reflect a projected image from the half mirror, respectively, and output a first floating image and a second floating image based on an inverted real image, respectively, respectively, in which the half mirror is configured to transmit the first floating image and the second floating image. Accordingly, it is possible to reduce fatigue caused by binocular disparity while implementing a clear floating image on a large screen.

Meanwhile, the first mirror and the second mirror can include an anamorphic mirror or an anamorphic Fresnel concave mirror having a different focal length on a first axis and a second axis. Accordingly, it is possible to reduce fatigue caused by binocular disparity while implementing a clear floating image on a large screen.

Meanwhile, the first mirror and the second mirror can include a Fresnel concave mirror having a pitch of 0.3 mm to 0.5 mm or a Fresnel concave mirror having a curved reflective surface. Accordingly, it is possible to reduce fatigue caused by binocular disparity while implementing a clear floating image on a large screen.

Meanwhile, in accordance with another aspect of the present disclosure, a floating display device for vehicle includes: an image generating device configured to output a projected image; a first folding mirror and a second folding mirror spaced apart from each other, and configured to reflect the projected image from the image generating device respectively; and a mirror configured to reflect the projected image from the first folding mirror and the second folding mirror, respectively, and output a first floating image and a second floating image based on an inverted real image, respectively. Accordingly, it is possible to reduce fatigue caused by binocular disparity while implementing a clear floating image on a large screen.

Meanwhile, the mirror can include an anamorphic mirror or an anamorphic Fresnel concave mirror having a different focal length on a first axis and a second axis. Accordingly, it is possible to reduce fatigue caused by binocular disparity while implementing a clear floating image on a large screen.

Meanwhile, the mirrors can include a Fresnel concave mirror having a pitch of 0.3 mm to 0.5 mm or a Fresnel concave mirror having a curved reflective surface. Accordingly, it is possible to reduce fatigue caused by binocular disparity while implementing a clear floating image on a large screen.

### BRIEF DESCRIPTION OF THE DRAWINGS

FIG. 1 is a drawing illustrating an example of the exterior and interior of a vehicle;
FIGS. 2A to 2B are drawings illustrating a floating image displayed on an upper portion of a second display of FIG. 1;
FIG. 2C is a drawing illustrating a floating image displayed on an upper portion of a first display of FIG. 1;
FIGS. 3A to 3B are drawings for explaining a floating display device for vehicle related to the present disclosure;
FIG. 4 is a drawing illustrating an example of an internal configuration of a floating display device for vehicle according to an embodiment of the present disclosure;
FIG. 5 is a drawing illustrating an example of an internal configuration of a floating display device for vehicle according to another embodiment of the present disclosure;
FIGS. 6A to 6D are drawings for explaining FIGS. 4 and 5; and
FIGS. 7A to 9 are drawings illustrating a floating display device for vehicle according to various embodiments of the present disclosure.

### DETAILED DESCRIPTION

Hereinafter, the present disclosure will be described in more detail with reference to the drawings.

The suffixes "module" and "part" used for components in the following description are merely intended to facilitate description of the specification, and the suffixes do not have any special meaning or function. Accordingly, the "module" and "part" can be used interchangeably.

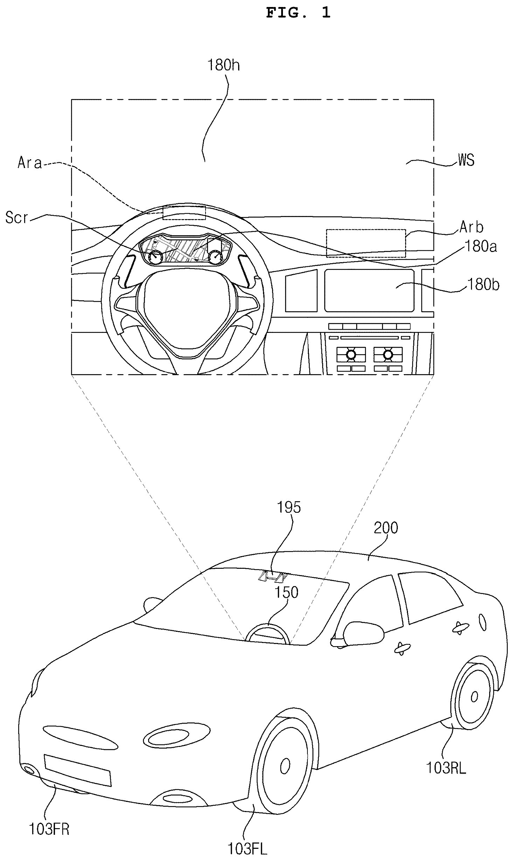

FIG. 1 is a drawing showing an example of the exterior and interior of a vehicle.

Referring to the drawing, a vehicle 200 is operated by a plurality of wheels 103FR, 103FL, 103RL,... that rotate by a power source and a steering wheel 150 for controlling the moving direction of the vehicle 200.

Meanwhile, the vehicle 200 can further include a camera 195 for obtaining images in front of the vehicle.

Meanwhile, the vehicle 200 can include a plurality of displays 180a, 180b, 180h, which display images, information, etc., that are provided therein.

For example, among the plurality of displays 180a, 180b, 180h, a first display 180a can be a cluster display, a second display 180b can be an Audio Video Navigation (AVN) display, and a third display 180h can be a HUD display which is a head up display (HUD) that projects an image onto a certain separated area Ara on a windshield WS.

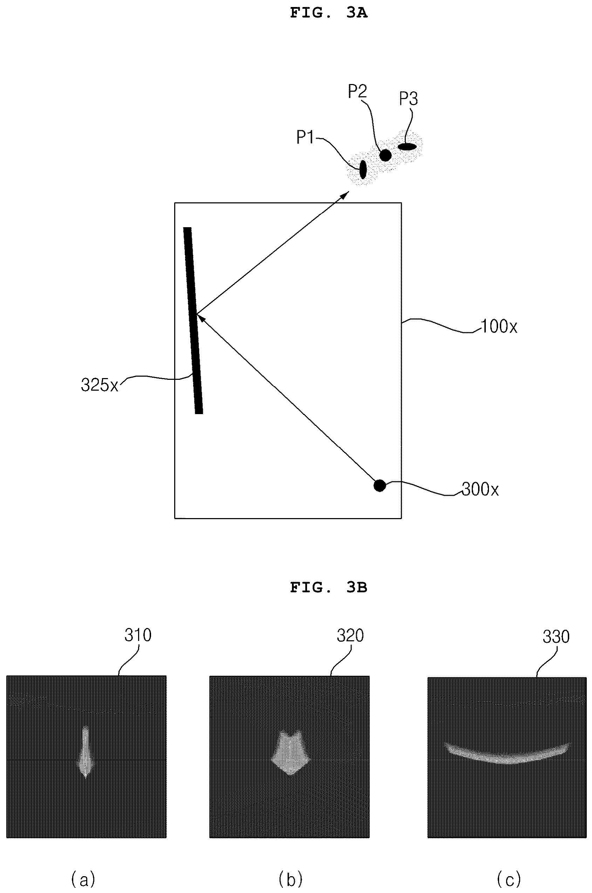

Meanwhile, a floating display device for vehicle (100 in FIG. 3) according to an embodiment of the present disclosure can display a floating image on an upper portion Arb of the second display 180b, display a floating image on an upper portion Ara of the first display 180a, or display a floating image on the upper portion Ara of the first display 180a and the upper portion Arb of the second display 180b, respectively.

Meanwhile, the vehicle 200 described in this specification can be a concept that includes all of a vehicle equipped with an engine as a power source, a hybrid vehicle equipped with an engine and an electric motor as power sources, and an electric vehicle equipped with an electric motor as a power source.

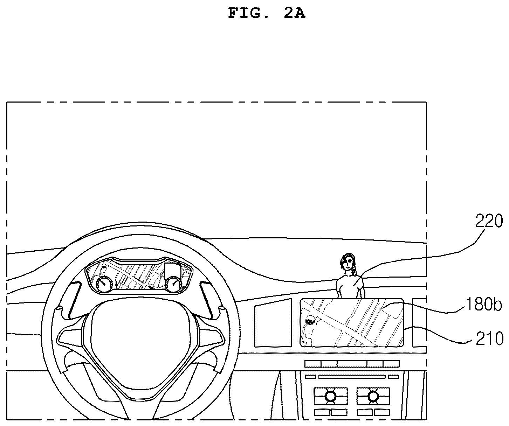

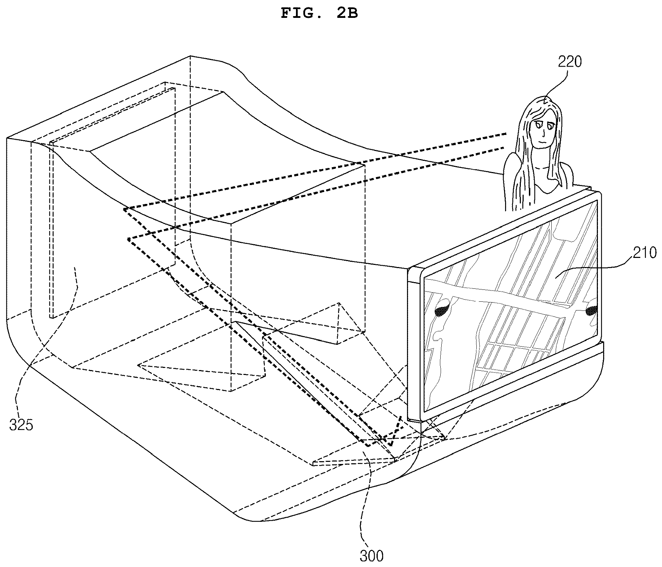

FIGS. 2A and 2B are drawings illustrating a floating image displayed on the upper portion of the second display of FIG. 1.

First, FIG. 2A illustrates a floating image 210 displayed on the upper portion Arb of an AVN display which is the second display 180b.

Referring to the drawing, in a state where a navigation image 210 is displayed on the AVN display which is the second display 180b, a floating display device for vehicle 100 disposed on a rear surface of the second display 180b can display a floating image 220 for providing information, etc.

In particular, since the floating image 220 is displayed on the upper portion of the second display 180b, various information linked to the navigation image 210 can be provided, thereby improving visibility.

FIG. 2B illustrates an example of the internal structure of the floating display device for vehicle 100 for providing the floating image 210 of FIG. 2a.

Referring to the drawing, the floating display device for vehicle 100 includes an image generating device 300 that outputs a projected image, and a mirror 325 that reflects the projected image from the image generating device 300 and outputs an inverted, real-image-based floating image.

The mirror 325 can include an anamorphic mirror or an anamorphic Fresnel concave mirror. Accordingly, it is possible to reduce fatigue caused by binocular disparity while implementing a clear floating image on a large screen.

As shown in FIG. 2B, when the image generating device 300 is disposed below the second display 180b, a mirror 325 can be disposed spaced apart from the rear surface of the second display 180b.

Accordingly, the structure of the floating display device for vehicle 100 does not protrude outward, while a floating image 220 is provided to the upper portion of the second display 180b.

Alternatively, the mirror 325 includes a Fresnel concave mirror 325 having a pitch of 0.3 mm to 0.5 mm, or a Fresnel concave mirror 325 having a curved reflective surface. Accordingly, it is possible to reduce the size of the floating display device for the vehicle while implementing a clear floating image on a large screen.

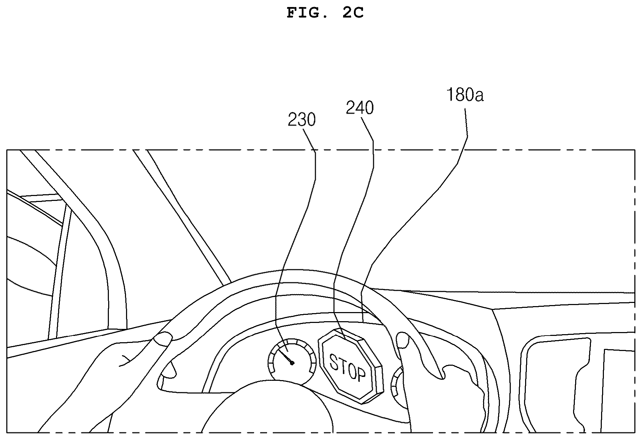

FIG. 2C is a drawing illustrating a floating image displayed on the upper portion of the first display of FIG. 1.

In particular, FIG. 2C illustrates a floating image 210 displayed on the upper portion Arb of the AVN display which is the first display 180a.

Referring to the drawing, in a state where a cluster image 230 is displayed on a cluster display which is the first display 180a, the floating display device for vehicle 100 disposed on the rear surface of the first display 180a can display a floating image 240 for providing information, etc.

In particular, since the floating image 240 is displayed on the upper portion of the first display 180a, various information linked to the cluster image 230 can be provided, thereby improving visibility.

Meanwhile, the floating image 240 is movable, thus enabling a floating-image-based-interaction with a driver.

Meanwhile, the floating display device for vehicle 100 of FIG. 2C, similar to FIG. 2B, includes an image generating device 300 that outputs a projected image, and a mirror 325 that reflects the projected image from the image generating device 300 and outputs a floating image based on inverted real image.

Here, the mirror 325 includes an anamorphic mirror or an anamorphic Fresnel concave mirror. Accordingly, it is possible to reduce fatigue caused by binocular disparity while implementing a clear floating image on a large screen.

Alternatively, the mirror 325 includes a Fresnel concave mirror 325 having a pitch of 0.3 mm to 0.5 mm, or a Fresnel concave mirror 325 having a curved reflective surface. Accordingly, it is possible to reduce the size of the floating display device for the vehicle while implementing a clear floating image on a large screen.

FIGS. 3A and 3B are drawings for explaining a floating display device for vehicle related to the present disclosure.

FIG. 3A is a drawing illustrating the structure of a floating display device for vehicle related to the present disclosure.

Referring to FIG. 3A, a floating display device for vehicle 100x related to the present disclosure includes an image generating device 300x that outputs a projected image, and a mirror 325x that reflects the projected image from the image generating device 300.

The floating image reflected from the mirror 325x is formed at an image forming position, such as P1, P2, or P3, and can be perceived as floating in space.

Meanwhile, when a concave mirror or Fresnel concave mirror is used as the mirror 325x, aberrations occur and an extended focal length is formed, so that clarity is poor. Furthermore, binocular disparity increases depending on the viewing position, thereby causing fatigue.

FIG. 3B is a drawing illustrating the focus shape at the image forming positions P1, P2, and P3 of FIG. 3A.

FIG. 3B(a) shows a focus shape 310 at the image forming position of P1, FIG. 3B(b) shows a focus shape 320 at the image forming position of P2, and FIG. 3b(c) shows a focus shape 330 at the image forming position of P3.

When examining the focus shapes 310, 320, 330 at the image forming positions of P1, P2, and P3 respectively, it can be seen that due to the occurrence of aberrations, each exhibits a form where the focal length has increased. Consequently, the floating image is not clear, and binocular disparity increases depending on the viewing position, causing significant fatigue.

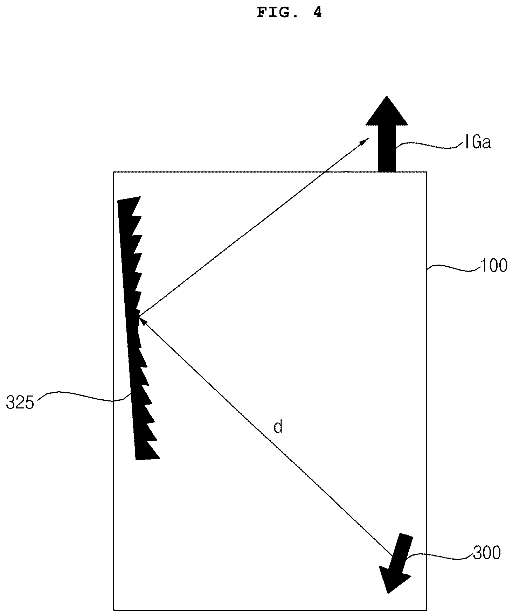

Therefore, the present disclosure proposes a method for implementing a clear floating image on a large screen while reducing fatigue caused by binocular disparity. This will be described with reference to FIG. 4 and below.

FIG. 4 is a drawing illustrating an example of the internal configuration of a floating display device for vehicle according to an embodiment of the present disclosure.

Referring to FIG. 4, the floating display device for vehicle 100 according to an embodiment of the present disclosure includes an image generating device 300 that outputs a projected image, and a mirror 325 that reflects the projected image from the image generating device 300 and outputs a floating image based on inverted real image.

Meanwhile, the mirror 325 includes an anamorphic mirror or an anamorphic Fresnel concave mirror. Accordingly, it is possible to reduce fatigue caused by binocular disparity while implementing a clear floating image on a large screen.

Alternatively, the mirror 325 includes a Fresnel concave mirror 325 having a pitch of 0.3 mm to 0.5 mm or a Fresnel concave mirror 325 having a curved reflective surface. Accordingly, it is possible to reduce the size of the floating display device for the vehicle while implementing a clear floating image on a large screen.

Meanwhile, the distance d between the image generating device 300 and the mirror 325 is greater than the focal length of the mirror 325.

That is, if the focal length of the mirror 325 is f, it is preferable that f<d, in order to output a floating image based on inverted real image.

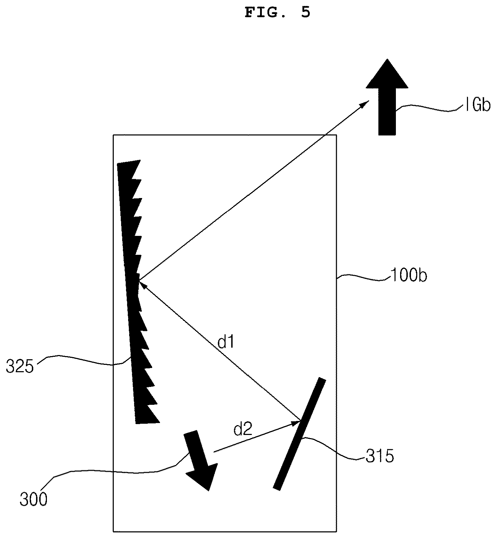

FIG. 5 is a drawing illustrating an example of the internal configuration of a floating display device for vehicle according to another embodiment of the present disclosure.

Referring to FIG. 5, a floating display device for vehicle 100b according to another embodiment of the present disclosure can include an image generating device 300 that outputs a projected image, a second mirror 315 that reflects the projected image from the image generating device 300, and a mirror 325 that reflects the projected image from the second mirror 315 and outputs a floating image based on inverted real image.

That is, unlike FIG. 4, the second mirror 315 can be further provided.

Meanwhile, the image generating device 300 can be disposed lower than the second mirror 315, and the second mirror 315 can be disposed lower than the mirror 325.

Meanwhile, the distance d2 between the image generating device 300 and the second mirror 315 is greater than the distance d1 between the second mirror 315 and the mirror 325.

Meanwhile, the sum (d1+d2) of the distance d2 between the image generating device 300 and the second mirror 315 and the distance d1 between the second mirror 315 and the mirror 325 is greater than the focal length of the mirror 325. This allows for the implementation of a clear floating image on a large screen while reducing fatigue caused by binocular disparity.

That is, if the focal length of the mirror 325 is f, it is preferable that f < (d1+d2) so as to output a floating image based on an inverted real image.

Meanwhile, as described above, when the second mirror 315 is further provided, the size of the floating display device for vehicle 100 can be reduced compared to FIG. 4, etc.

Meanwhile, if the center of curvature of the mirror 325 is c, an inverted magnified real image is generated when f < (d1 + d2) < c, and an inverted reduced real image is generated when (d1 + d2) > c.

Meanwhile, when an inverted reduced real image is used, the size of the image generating device 300 and the floating display device for vehicle 100 must increase in comparison with the floating image.

Therefore, the present disclosure implements a floating image based on an inverted magnified real image. That is, if the center of curvature of the mirror 325 is c, it is implemented as f < (d1 + d2) < c.

Meanwhile, this principle can be applied to FIG. 4. That is, if the center of curvature of the mirror 325 is c, it can be implemented as f < d < c.

Meanwhile, when using an inverted magnified image, a floating image larger than the projected image of the image generating device 300 can be secured, but the resolution, etc. can be reduced.

Therefore, in the present disclosure, an anamorphic mirror or an anamorphic Fresnel concave mirror is used as the mirror 325. Accordingly, it is possible to reduce fatigue caused by binocular disparity while implementing a clear floating image on a large screen.

Alternatively, a Fresnel concave mirror 325 having a pitch of 0.3 mm to 0.5 mm or a Fresnel concave mirror 325 having a curved reflective surface is used as the mirror 325. Accordingly, it is possible to reduce the size of the floating display device for the vehicle while implementing a clear floating image on a large screen.

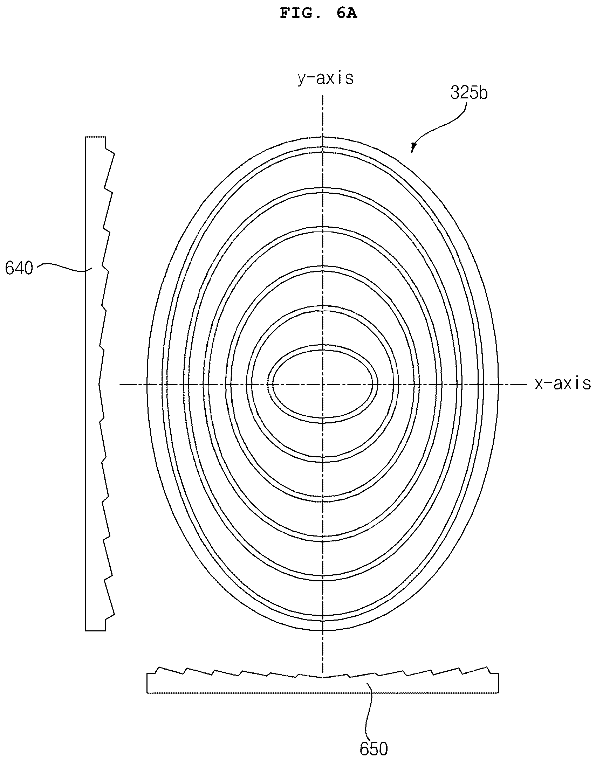

FIGS. 6A to 6D are drawings for explaining FIGS. 4 and 5.

FIG. 6A illustrates a case where the mirror is an anamorphic mirror or an anamorphic Fresnel concave mirror.

Referring to FIG. 6A, the mirror 325b includes an anamorphic mirror or an anamorphic Fresnel concave mirror.

When an anamorphic concave mirror or an anamorphic Fresnel concave mirror is used as the mirror 325b, a design for reducing vertical and horizontal light spread is possible, so that it is possible to generate a floating image having clear image quality and less fatigue caused by binocular disparity.

Meanwhile, the anamorphic mirror or the anamorphic Fresnel concave mirror can have different focal lengths on a first axis (e.g., the x-axis) and a second axis (e.g., the y-axis).

The drawing illustrates an anamorphic mirror or an anamorphic Fresnel concave mirror in which the focal length on the second axis (e.g., the y-axis) is greater than the focal length on the first axis (e.g., the x-axis).

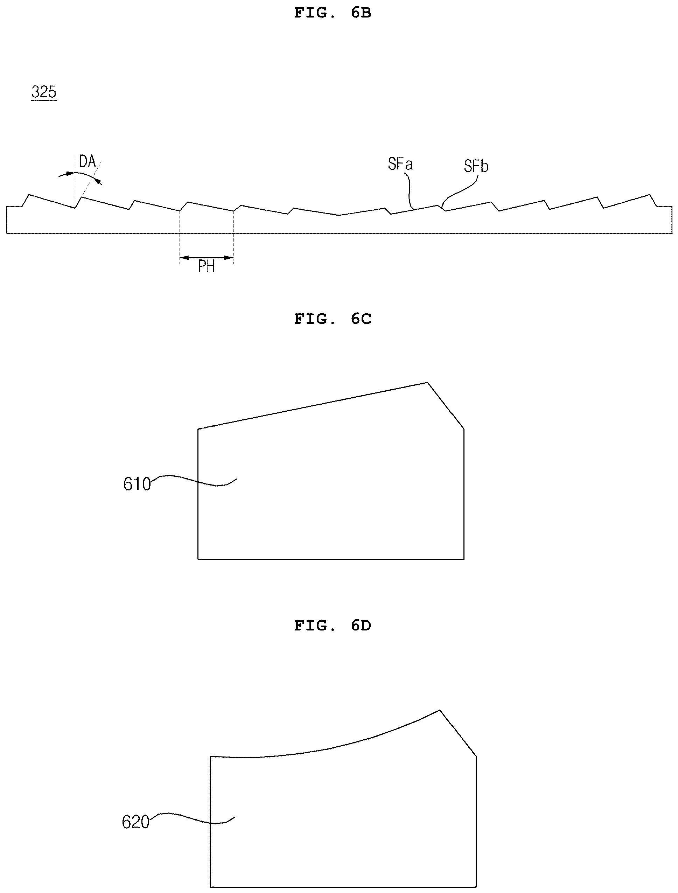

FIG. 6B illustrates a case where the mirror is a Fresnel concave mirror.

Referring to FIG. 6B, the mirror 325 can include a Fresnel concave mirror.

The mirror 325 of FIG. 6B has a symmetrical pattern and a pitch PH of each pattern, a draft angle of each pattern, a reflective surface SFa where reflection occurs, and a non-reflective slope SFb.

For example, if the pitch PH is 0.3 mm or less, haze occurs due to the increase in the slope SFb and light scattering, thereby causing an image to appear blurred.

Meanwhile, if the pitch PH is 0.5 mm or greater, stripes of the Fresnel concave mirror can be recognizable.

Meanwhile, the mirror 325 is preferably a Fresnel concave mirror having a pitch PH of 0.3 mm to 0.5 mm. Accordingly, it is possible to reduce the size of the floating display device for the vehicle while implementing a clear floating image on a large screen.

FIG. 6C illustrates a Fresnel concave mirror having a flat reflective surface, and FIG. 6D illustrates a Fresnel concave mirror having a curved reflective surface.

In the mirror 325 of FIG. 6B, if the reflective surface SFa on which reflection occurs is a flat reflective surface, as shown in FIG. 6C, the focal length of each reflective surface will vary, so that a deterioration in image quality occurs.

Meanwhile, in the mirror 325 of FIG. 6B, if the reflective surface SFa on which reflection occurs is a curved reflective surface, as shown in FIG. 6D, the focal lengths of respective individual inclined surfaces can be made the same. Accordingly, the output of clear and less tiring floating images becomes possible.

That is, the mirror 325 is preferably a Fresnel concave mirror having a curved reflective surface. Accordingly, it is possible to reduce the size of the floating display device for the vehicle while implementing a clear floating image on a large screen.

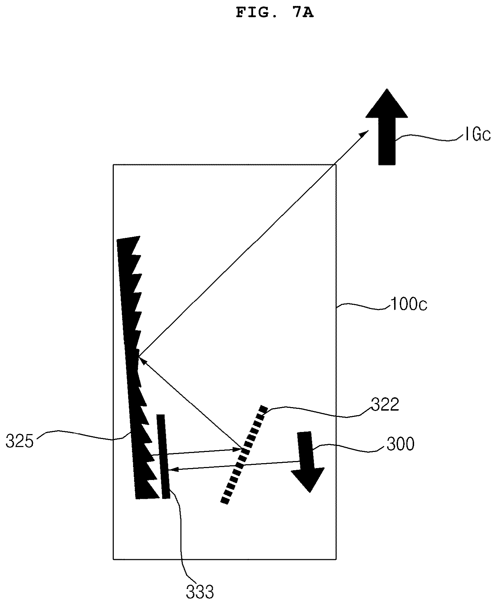

FIGS. 7A to 9 are drawings illustrating a floating display device for vehicle according to various embodiments of the present disclosure.

First, FIG. 7A is a drawing illustrating a floating display device for vehicle according to another embodiment of the present disclosure.

Referring to FIG. 7A, the floating display device for vehicle 100c according to another embodiment of the present disclosure includes an image generating device 300 that outputs a projected image, and a mirror 325 that reflects the projected image from the image generating device 300 and outputs a floating image based on inverted real image.

The mirror 325 includes an anamorphic mirror or an anamorphic Fresnel concave mirror.

Alternatively, the mirror 325 includes a Fresnel concave mirror 325 having a pitch of 0.3 mm to 0.5 mm or a Fresnel concave mirror 325 having a curved reflective surface. Accordingly, it is possible to reduce the size of the floating display device for the vehicle while implementing a clear floating image on a large screen.

Meanwhile, a floating display device for vehicle 100c according to another embodiment of the present disclosure can further include at least one of a phase delay plate 333, a half mirror, and a reflective polarizing mirror 332 disposed between the image generating device 300 and the mirror 325.

The drawing illustrates an example in which a projected image from the image generating device 300 is reflected by the phase delay plate 333 disposed between the image generating device 300 and the mirror 325, and then reflected by the half mirror or reflective polarizing mirror 332 disposed between the phase delay plate 333 and the image generating device 300, and then incident on the mirror 325, and the projected image incident on the mirror 325 is reflected, thereby outputting a floating image based on inverted real image.

Meanwhile, the phase delay plate 333 can include a quarter-wave plate (QWP).

Meanwhile, the reflective polarizing mirror 332 can transmit P-polarized light and reflect S-polarized light, or reflect P-polarized light and transmit S-polarized light.

Meanwhile, the distance between the phase delay plate 333 and the half mirror or reflective polarizing mirror 332 is smaller than the distance between the image generating device 300 and the phase delay plate 333, and can be smaller than the distance between the half mirror or reflective polarizing mirror 332 and the mirror 325. Accordingly, it is possible to reduce the size of the floating display device for vehicle 100c.

By using the phase delay plate 333 or the half mirror or reflective polarizing mirror 332, the size of the floating display device for vehicle 100c can be reduced, while realizing a clear floating image on a large screen, and reducing fatigue caused by binocular disparity.

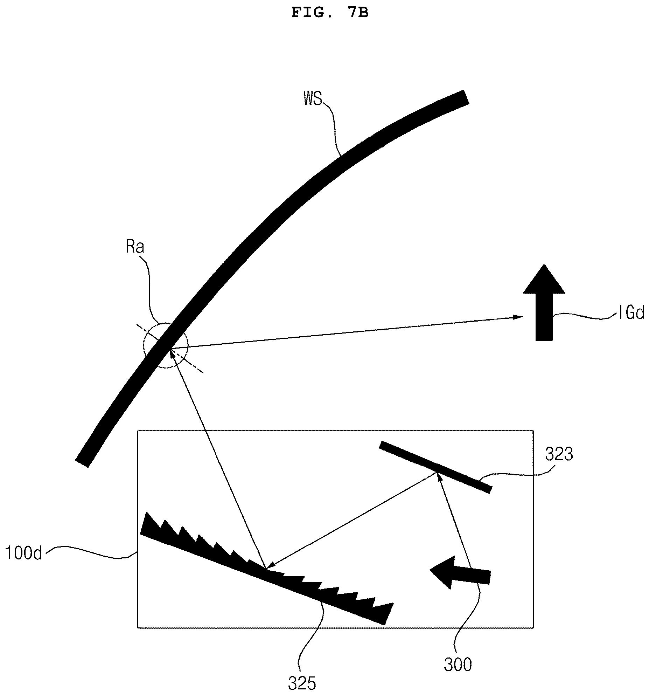

FIG. 7B is a drawing illustrating a floating display device for vehicle according to another embodiment of the present disclosure.

Referring to FIG. 7B, a floating display device for vehicle 100d according to another embodiment of the present disclosure includes an image generating device 300 that outputs a projected image, a second mirror 323 that reflects the projected image from the image generating device 300, and a mirror 325 that reflects the projected image from the second mirror 323 and outputs a floating image based on inverted real image.

The mirror 325 includes an anamorphic mirror or an anamorphic Fresnel concave mirror.

Alternatively, the mirror 325 includes a Fresnel concave mirror 325 having a pitch of 0.3 mm to 0.5 mm or a Fresnel concave mirror 325 having a curved reflective surface. Accordingly, it is possible to reduce the size of the floating display device for the vehicle while implementing a clear floating image on a large screen.

Meanwhile, the floating image reflected from the mirror 325 within the floating display device for vehicle 100d can be reflected to the vehicle's windshield WS and output to a predetermined area.

Here, the predetermined area is a driver's field of vision, can correspond to eye box.

Meanwhile, the distance between the image generating device 300 and the second mirror 323 can be smaller than the distance between the second mirror 323 and the mirror 325, and smaller than the distance between the mirror 325 and the windshield WS. Accordingly, the size of the floating display device for vehicle 100d can be reduced.

Ultimately, the floating image reflected from the mirror 325 is reflected to the vehicle's windshield WS and output, thereby reducing the size of the floating display device for vehicle 100d while implementing a clear floating image on a large screen, and reducing fatigue caused by binocular disparity.

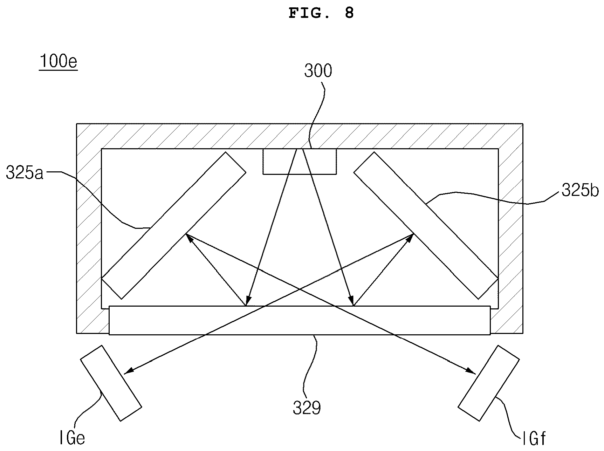

FIG. 8 is a drawing illustrating a floating display device for vehicle according to another embodiment of the present disclosure.

Referring to FIG. 8, a floating display device for vehicle 100e according to another embodiment of the present disclosure includes an image generating device 300 that outputs a projected image, a half mirror 329 that reflects the projected image from the image generating device 300, and a first mirror 325a and a second mirror 325b that are spaced apart from each other, and respectively reflect the projected image from the half mirror 329 to output a first floating image and a second floating image based on an inverted real image, respectively, respectively.

Meanwhile, the half mirror 329 transmits the first and second floating images. Accordingly, it is possible to reduce the size of the floating display device for the vehicle while implementing a clear floating image on a large screen.

That is, a first projected image output from the image generating device 300 is output as a first floating image toward a passenger seat, via the half mirror 329 and the first mirror 325a.

Meanwhile, the second projected image output from the image generating device 300 passes is output as a second floating image toward the driver's seat, via the half mirror 329 and the second mirror 325b. Accordingly, a plurality of floating images can be output toward the driver's seat and the passenger's seat, respectively.

Meanwhile, the first mirror 325a and the second mirror 325b can include an anamorphic mirror or anamorphic Fresnel concave mirror with different focal lengths on the first and second axes. Accordingly, it is possible to reduce the size of the floating display device for the vehicle while implementing a clear floating image on a large screen.

Meanwhile, the first mirror 325a and the second mirror 325b can include a Fresnel concave mirror 325 having a pitch of 0.3 mm to 0.5 mm or a Fresnel concave mirror 325 having a curved reflective surface. Accordingly, it is possible to reduce the size of the floating display device for the vehicle while implementing a clear floating image on a large screen.

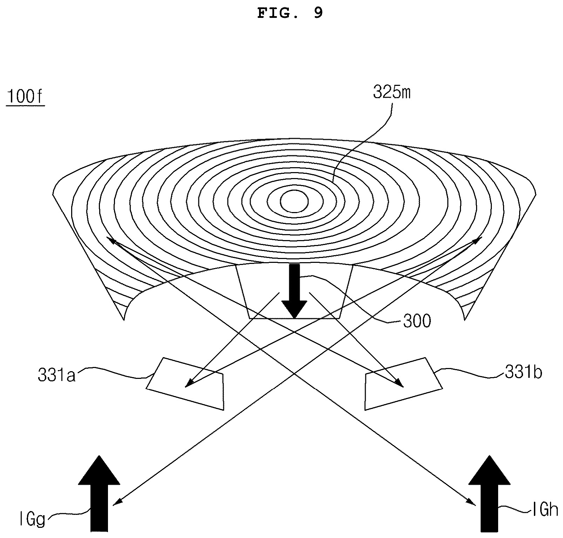

FIG. 9 is a drawing illustrating a floating display device for vehicle according to another embodiment of the present disclosure.

Referring to FIG. 9, the floating display device 100f for a vehicle according to another embodiment of the present disclosure includes an image generating device 300 that outputs a projected image, a first folding mirror 331a and a second folding mirror 331b that are spaced apart from each other, and respectively reflect the projected image from the image generating device 300, and a mirror 325 that respectively reflects the projected images from the first folding mirror 331a and the second folding mirror 331b, and outputs a first floating image and a second floating image based on an inverted real image, respectively. Accordingly, it is possible to reduce the size of the floating display device for the vehicle while implementing a clear floating image on a large screen.

That is, the first projected image output from the image generating device 300 is output as a first floating image toward the driver's seat, via the first folding mirror 331a and the mirror 325.

Meanwhile, the second projected image output from the image generating device 300 is output as a second floating image toward the passenger seat, via the second folding mirror 331b and the mirror 325. Accordingly, a plurality of floating images can be output toward the driver's seat and the passenger seat, respectively.

Meanwhile, the mirror 325 can include an anamorphic mirror or an anamorphic Fresnel concave mirror with different focal lengths on the first and second axes. Accordingly, it is possible to reduce the size of the floating display device for the vehicle while implementing a clear floating image on a large screen.

Meanwhile, the mirror 325 can include a Fresnel concave mirror 325 having a pitch of 0.3 mm to 0.5 mm or a Fresnel concave mirror 325 having a curved reflective surface. Accordingly, it is possible to reduce the size of the floating display device for the vehicle while implementing a clear floating image on a large screen.

For example, when the second folding mirror 331b is mechanically folded, the floating display device for vehicle 100f outputs the first floating image toward the driver's seat.

As another example, when the first folding mirror 331a is mechanically folded, the floating display device for vehicle 100f outputs the second floating image toward the passenger seat.

Meanwhile, although the present disclosure has been described with reference to specific embodiments shown in the drawings, it is apparent to those skilled in the art that the present description is not limited to those exemplary embodiments and is embodied in many forms without departing from the scope of the present disclosure, which is described in the following claims. These modifications should not be individually understood from the technical scope of the present disclosure.

## Claims

1. A floating display device for vehicle comprising:
an image generating device configured to output a projected image; and
a mirror configured to reflect the projected image from the image generating device and output a floating image based on inverted real image,
wherein the mirror comprises an anamorphic mirror or an anamorphic Fresnel concave mirror.

2. The floating display device for vehicle of claim 1, wherein the anamorphic mirror or the anamorphic Fresnel concave mirror has a different focal length on a first axis and a second axis.

3. The floating display device for vehicle of claim 1, wherein a distance between the image generating device and the mirror is greater than a focal length of the mirror.

4. The floating display device for vehicle of claim 1, further comprising at least one of a phase delay plate, a half mirror, or a reflective polarizing mirror disposed between the image generating device and the mirror.

5. The floating display device for vehicle of claim 1, further comprising a second mirror configured to reflect a projected image from the image generating device,
wherein the mirror is configured to reflect the projected image from the second mirror and output the floating image based on inverted real image.

6. The floating display device for vehicle of claim 5, wherein a sum of a distance between the image generating device and the second mirror and a distance between the second mirror and the mirror is greater than a focal length of the mirror.

7. The floating display device for vehicle of claim 5, wherein a distance between the image generating device and the second mirror is greater than a distance between the second mirror and the mirror.

8. The floating display device for vehicle of claim 5, wherein the floating image reflected from the mirror is reflected to a windshield of vehicle and output to a predetermined area.

9. A floating display device for vehicle comprising:
an image generating device configured to output a projected image; and
a mirror configured to reflect the projected image from the image generating device and output a floating image based on inverted real image,
wherein the mirror comprises a Fresnel concave mirror having a pitch of 0.3 mm to 0.5 mm or a Fresnel concave mirror having a curved reflective surface.

10. The floating display device for vehicle of claim 9, further comprising a second mirror configured to reflect the projected image from the image generating device,
wherein the mirror is configured to reflect the projected image from the second mirror and output the floating image based on inverted real image.

11. A floating display device for vehicle comprising:
an image generating device configured to output a projected image;
a half mirror configured to reflect the projected image from the image generating device; and
a first mirror and a second mirror spaced apart from each other, and configured to reflect a projected image from the half mirror, respectively, and output a first floating image and a second floating image based on an inverted real image, respectively, respectively,
wherein the half mirror is configured to transmit the first floating image and the second floating image.

12. The floating display device for vehicle of claim 11, wherein the first mirror and the second mirror comprise an anamorphic mirror or an anamorphic Fresnel concave mirror having a different focal length on a first axis and a second axis.

13. The floating display device for vehicle of claim 11, wherein the first mirror and the second mirror comprise a Fresnel concave mirror having a pitch of 0.3 mm to 0.5 mm or a Fresnel concave mirror having a curved reflective surface.

14. A floating display device for vehicle comprising:
an image generating device configured to output a projected image;
a first folding mirror and a second folding mirror spaced apart from each other, and configured to reflect the projected image from the image generating device respectively; and
a mirror configured to reflect the projected image from the first folding mirror and the second folding mirror, respectively, and output a first floating image and a second floating image based on an inverted real image, respectively.

15. The floating display device for vehicle of claim 14, wherein the mirror comprises an anamorphic mirror or an anamorphic Fresnel concave mirror having a different focal length on a first axis and a second axis.

16. The floating display device for vehicle of claim 14, wherein the mirrors comprises a Fresnel concave mirror having a pitch of 0.3 mm to 0.5 mm or a Fresnel concave mirror having a curved reflective surface.
